# EUROPEAN PATENT SPECIFICATION

(11) **EP 3 096 215 B1**
(45) Date of publication and mention of the grant of the patent: **05.02.2020**
(21) Application number: 14879181.7
(22) Date of filing: 15.01.2014
(51) Int. Cl.: G06F 3/0488, G06F 3/0482

(54) **TERMINAL OPERATION APPARATUS AND TERMINAL OPERATION METHOD**
ENDGERÄTBETRIEBSVORRICHTUNG UND ENDGERÄTBETRIEBSVERFAHREN
APPAREIL D'OPÉRATIONS D'UN TERMINAL ET PROCÉDÉ D'OPÉRATIONS D'UN TERMINAL

(43) Date of publication of application: 23.11.2016
(73) Proprietor: Yulong Computer Telecommunication Scientific (Shenzhen) Co. Ltd., Shenzhen, Guangdong 518057 (CN)
(72) Inventor: SHENG, Jingen, Shenzhen Guangdong 518057 (CN)
(74) Representative: Dr. Weitzel & Partner
(86) International application number: PCT/CN2014/070638
(87) International publication number: WO 2015/106399

(56) References cited:
- EP-A1- 2 584 440
- WO-A1-2013/019882
- CN-A- 103 473 004
- CN-A- 103 473 004
- US-A1- 2010 090 971
- US-A1- 2010 162 179
- US-A1- 2012 131 508

## Description

### Field of the Invention

The present invention relates to the technical field of terminal manipulation, and in particular, to a terminal operation device and a terminal operation method.

### Background of the Invention

In related technology, operation modes of a list on a terminal display interface mainly include: sliding on the list to execute related operations, long pressing information items in the list to pop up related operation hints, or entering list details to execute the operations, and for some information with privacy, corresponding passwords need to be input to enter corresponding modes to execute the operations.

However, with regard to the method of directly sliding on the list to execute the related operations, due to the limitation of the list region, only a few common operations can be supported; and with regard to the method of long pressing the information items in the list to pop up the related operation hints and the method of entering the list details to execute the operations, the operations are relatively tedious, such that a user cannot operate the list quickly.

Therefore, how to conveniently enable the user to operate a plurality of information items on the terminal display interface becomes a technical problem to be solved urgently.

### Prior Art

In the related technology the following documents can be mentioned as prior art: CN 103 473 004 A, US 2010/162179 A1, US 2010/090971 A1, EP 2 584 440 A1, US 2012/131508 A1.

### Summary of the Invention

The present invention proposes a new terminal operation solution based on at least one of the above technical problems, such that a user can conveniently manage a list on a terminal display interface by simple operations, thereby improving the operation efficiency and being conducive to improving the operation experience of the user.

A terminal operation device and a terminal operation method according to the invention are disclosed in claims 1 and 6.

In view of this, the present invention proposes a terminal operation device, including: a display unit adapted to display a list with a plurality of information items; a judging unit adapted to judge whether to display an information item between two specified information items according to a received operation instruction of the two specified information items in the list; and a processing unit adapted to process the information item between the two specified information items according to a judgment result of the judging unit.

In the technical solution, when the operation instruction of the two specified information items in the list is received, whether displaying the information item between the two specified information items according to the received operation instruction is processed, such that the user can conveniently manage the list on the terminal display interface by simple operations, thereby improving the operation efficiency and being conducive to improving the operation experience of the user.

In the above technical solution the judging unit is specifically adapted to: when receiving a first operation instruction of two spaced information items in the list, judging not to display the information item between the two spaced information items.

In the technical solution when the user needs to delete a specified information item in the list, in the operation mode in related technology the information item to be deleted needs to be long pressed to pop up a prompt message and delete the information item according to the prompt message, or when the user needs to add a specified information item in the list to a private list, the user needs to set in a private mode, the operation process is tedious, and a lot of time of the user is wasted, but by means of the manner that when receiving the first operation instruction of the two spaced information items in the list, the information item between the two spaced information items is not displayed, the user can operate two information items adjacent to the specified information item in the list when needing not to display the specified information item (for example, delete the specified information item or add the specified information item to the private list and the like), thereby greatly facilitating the user operation and improving the user experience.

In the above technical solution when the judging unit judges not to display the information item between the two spaced information items, the processing operation of the processing unit on the information item between the two spaced information items includes: deleting the information item between the two spaced information items, or storing the information item between the two spaced information items in a specified storage space or hiding the information item between the two spaced information items.

In the technical solution the storing the information item between the two spaced information items in a specified storage space can be storing the information item between the two spaced information items in a private space or adding the information item between the two spaced information items to a backlist, and the like. In the above technical solution, preferably, the terminal operation device further includes: an association unit adapted to associate the first operation instruction with a specified processing operation according to a received association instruction, for enabling the processing unit to process the information item between the two spaced information items according to the processing operation associated with the first operation instruction.

In the technical solution, since the first operation instruction is associated with the specified processing operation, when receiving the first operation instruction of the user, a terminal can identify the operation intension of the user to execute a corresponding processing operation. Specifically, a manufacturer of the terminal can preset the processing operation corresponding to the first operation instruction (for example, deleting the information item between the two spaced information items is used as the preset processing operation corresponding to the first operation instruction), when in use, the user can modify the corresponding processing operation (for example, modify a deletion operation to an operation of storing the information item between the two spaced information items in the private space).

In the above technical solution the processing unit is further adapted to: when receiving the first operation instruction, selecting the processing operation on the information item between the two spaced information items according to an attribute of the information item between the two spaced information items, so as to process the information item between the two spaced information items.

In the technical solution an information item B is an information item between an information item A and an information item C, if it is determined that the information item B belongs to private information according to the preset of the user, when the first operation instruction is executed on the information item A and the information item C, the information item B can be directly put in the private space; if it is determined that the information item B belongs to junk information according to the preset of the user, when the first operation instruction is executed on the information item A and the information item C, the information item B can be directly deleted; and if it is determined that the information item B belongs to information needing to be hidden, when the first operation instruction is executed on the information item A and the information item C, the information item B can be directly hidden.

Of course, the terminal can also count the operation habits of the user, for example, when the times of the user for adding the information of a linkman E to the private space exceed preset times, the terminal determines the information of the linkman E as private information, when the information of the linkman E is located between spaced information D and information F, and when executing the first operation instruction on the information D and the information F, the terminal directly adds the information E to the private space.

In the above technical solution, preferably, the first operation instruction includes a kneading gesture or a separation gesture.

In the technical solution, the kneading gesture is executed on the two spaced information items to not display the information item between the two spaced information items, such that the operation process is vivid, and the pleasure of the user operation is improved. The separation gesture is executed on the two spaced information items to not display the information item between the two spaced information items, for example, when executing the deletion operation, when the separation gesture is executed on the two spaced information items, an animation of putting the information item between the two spaced information items in a dustbin can be played between the two spaced information items, such that the operation process is vivid similarly.

In the above technical solution, preferably, the judging unit is further adapted to: when receiving a second operation instruction of two adjacent information items in the list, judging to display a non-displayed information item between the two adjacent information items.

In the technical solution, when the user needs to display the hidden information item in the list, for example, display the information item added to the private space, the operation mode in the related technology is to set in the private space in general, the operation process is tedious, and a lot of time of the user is wasted, but by means of the manner that when receiving the second operation instruction of two adjacent information items in the list, the non-displayed information item between the two adjacent information items is displayed, the user only needs to operate the two adjacent information items in the list, thereby greatly facilitating the operation process of the user and improving the user experience.

In the above technical solution, preferably, the non-displayed information item includes an information item stored in the specified storage space or a hidden information item.

In the technical solution, specifically, the information item stored in the specified storage space can be an information item added to the private space or an information item added to the blacklist.

In the above technical solution, preferably, the second operation instruction includes a separation gesture.

In the technical solution, the separation gesture is executed on the two adjacent information items to display the information item between the two connected information items, such that the operation process is vivid, and the pleasure of the user operation is improved.

According to another aspect of the present invention, a terminal is further proposed, including the terminal operation device in any above technical solution.

According to another aspect of the present invention, a terminal operation method is further proposed, including: displaying a list with a plurality of information items; judging whether displaying an information item between two specified information items according to a received operation instruction of the two specified information items in the list, so as to obtain a judgment result; and processing the information item between the two specified information items according to the judgment result.

In the technical solution, when the operation instruction of the two specified information items in the list is received, whether displaying the information item between the two specified information items according to the received operation instruction is processed, such that the user can conveniently manage the list on the terminal display interface by simple operations, thereby improving the operation efficiency and being conducive to improving the operation experience of the user.

In the above technical solution, preferably, when receiving a first operation instruction of two spaced information items in the list, judging not to display the information item between the two spaced information items.

In the technical solution when the user needs to delete a specified information item in the list, in the operation mode in related technology the information item to be deleted needs to be long pressed to pop up a prompt message and delete the information item according to the prompt message, or when the user needs to add a specified information item in the list to a private list, the user needs to set in a private mode, the operation process is tedious, and a lot of time of the user is wasted, but by means of the manner that when receiving the first operation instruction of the two spaced information items in the list, the information item between the two spaced information items is not displayed, the user can operate two information items adjacent to the specified information item in the list when needing not to display the specified information item (for example, delete the specified information item or add the specified information item to the private list and the like), thereby greatly facilitating the user operation and improving the user experience.

In the above technical solution the processing operation of not displaying the information item between the two spaced information items includes: deleting the information item between the two spaced information items, or storing the information item between the two spaced information items in a specified storage space or hiding the information item between the two spaced information items.

In the technical solution, specifically, the storing the information item between the two spaced information items in a specified storage space can be storing the information item between the two spaced information items in a private space or adding the information item between the two spaced information items to a backlist, and the like.

In the above technical solution, preferably, before receiving the first operation instruction of the two spaced information items in the list, the terminal operation method further includes: associating the first operation instruction with a specified processing operation according to a received association instruction, so as to process the information item between the two spaced information items according to the processing operation associated with the first operation instruction, when judging not to display the information item between the two spaced information items.

In the technical solution, since the first operation instruction is associated with the specified processing operation, when receiving the first operation instruction of the user, a terminal can identify the operation intension of the user to execute a corresponding processing operation. Specifically, a manufacturer of the terminal can preset the processing operation corresponding to the first operation instruction (for example, deleting the information item between the two spaced information items is used as the preset processing operation corresponding to the first operation instruction), when in use, the user can modify the corresponding processing operation (for example, modify a deletion operation to an operation of storing the information item between the two spaced information items in the private space).

In the above technical solution, preferably, the first operation instruction includes a kneading gesture or a separation gesture.

In the technical solution, the kneading gesture is executed on the two spaced information items to not display the information item between the two spaced information items, such that the operation process is vivid, and the pleasure of the user operation is improved. The separation gesture is executed on the two spaced information items to not display the information item between the two spaced information items, for example, when executing the deletion operation, when the separation gesture is executed on the two spaced information items, an animation of putting the information item between the two spaced information items in a dustbin can be played between the two spaced information items, such that the operation process is vivid similarly.

In the above technical solution, preferably, when receiving a second operation instruction of two adjacent information items in the list, judging to display a non-displayed information item between the two adjacent information items.

In the technical solution, when the user needs to display the hidden information item in the list, for example, display the information item added to the private space, the operation mode in the related technology is to set in the private space in general, the operation process is tedious, and a lot of time of the user is wasted, but by means of the manner that when receiving the second operation instruction of two adjacent information items in the list, the non-displayed information item between the two adjacent information items is displayed, the user only needs to operate the two adjacent information items in the list, thereby greatly facilitating the operation process of the user and improving the user experience.

In the above technical solution, preferably, the non-displayed information item includes an information item stored in the specified storage space or a hidden information item.

In the technical solution, specifically, the information item stored in the specified storage space can be an information item added to the private space or an information item added to the blacklist.

In the above technical solution, preferably, the second operation instruction includes a separation gesture.

In the technical solution, the separation gesture is executed on the two adjacent information items to display the information item between the two connected information items, such that the operation process is vivid, and the pleasure of the user operation is improved.

By means of the above technical solutions, the user can conveniently manage the list on the terminal display interface by simple operations, thereby improving the operation efficiency and being conducive to improving the operation experience of the user.

### Brief Description of the Drawings

Fig. 1 shows a schematic block diagram of a terminal operation device according to an embodiment of the present invention;
Fig. 2 shows a schematic diagram of a flow of a terminal operation method according to an embodiment of the present invention;
Fig. 3 shows a schematic diagram of a flow of a terminal operation method according to another embodiment of the present invention;
Fig. 4A to Fig. 4C show a schematic diagram of a terminal operation interface according to an embodiment of the present invention.

### Detailed Description of the Embodiments

In order to understand the above purposes, features and advantages of the present invention more clearly, a further detailed description of the present invention will be given below in combination with the accompanying drawings and specific embodiments. It should be noted that, the embodiments and the features in the embodiments of the present application can be mutually combined as long as no conflict is generated.

A large number of specific details are illustrated in the description below to fully understand the present invention, however, the present invention can also be implemented in other manners different from what is described herein, therefore, the protection scope of the present invention is not limited by the specific embodiments disclosed below.

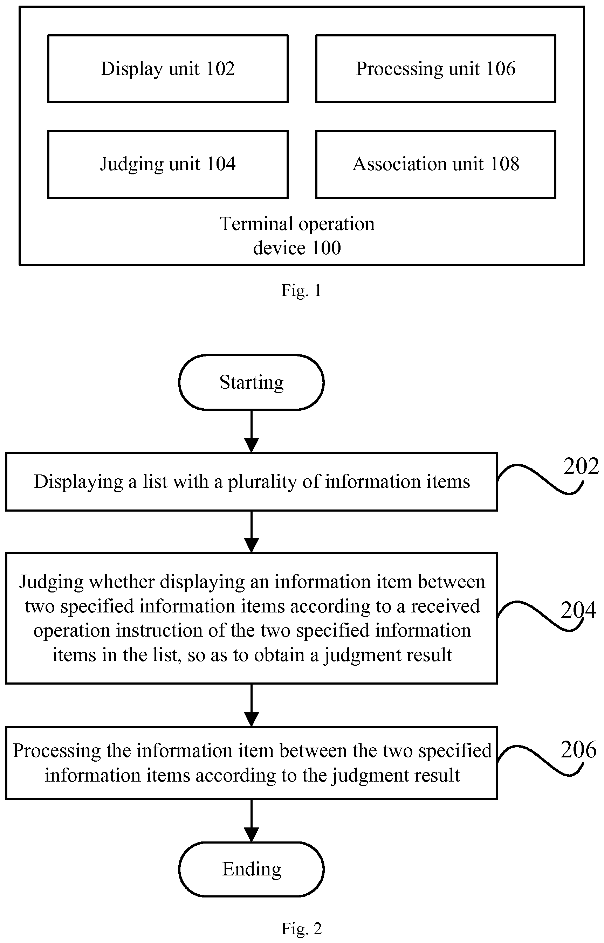

Fig. 1 shows a schematic block diagram of a terminal operation device according to an embodiment of the present invention.

As shown in Fig. 1, the terminal operation device 100 according to the embodiment of the present invention includes: a display unit 102 adapted to display a list with a plurality of information items; a judging unit 104 adapted to judge whether displaying an information item between two specified information items according to a received operation instruction of the two specified information items in the list; and a processing unit 106 adapted to process the information item between the two specified information items according to a judgment result of the judging unit 104.

In the technical solution, when the operation instruction of the two specified information items in the list is received, whether displaying the information item between the two specified information items according to the received operation instruction is processed, such that the user can conveniently manage the list on the terminal display interface by simple operations, thereby improving the operation efficiency and being conducive to improving the operation experience of the user.

In the above technical solution, preferably, the judging unit 104 is specifically adapted to: when receiving a first operation instruction of two spaced information items in the list, judging not to display the information item between the two spaced information items.

In the technical solution, for example, when the user needs to delete a specified information item in the list, in the operation mode in related technology the information item to be deleted needs to be long pressed to pop up a prompt message and delete the information item according to the prompt message, or when the user needs to add a specified information item in the list to a private list, the user needs to set in a private mode, the operation process is tedious, and a lot of time of the user is wasted, but by means of the manner that when receiving the first operation instruction of the two spaced information items in the list, the information item between the two spaced information items is not displayed, the user can operate two information items adjacent to the specified information item in the list when needing not to display the specified information item (for example, delete the specified information item or add the specified information item to the private list and the like), thereby greatly facilitating the user operation and improving the user experience.

In the above technical solution, preferably, when the judging unit 104 judges not to display the information item between the two spaced information items, the processing operation of the processing unit 106 on the information item between the two spaced information items includes: deleting the information item between the two spaced information items, or storing the information item between the two spaced information items in a specified storage space or hiding the information item between the two spaced information items.

In the technical solution, specifically, the storing the information item between the two spaced information items in a specified storage space can be storing the information item between the two spaced information items in a private space or adding the information item between the two spaced information items to a backlist, and the like.

In the above technical solution, preferably, the terminal operation device further includes: an association unit 108 adapted to associate the first operation instruction with a specified processing operation according to a received association instruction, for enabling the processing unit 106 to process the information item between the two spaced information items according to the processing operation associated with the first operation instruction.

In the technical solution, since the first operation instruction is associated with the specified processing operation, when receiving the first operation instruction of the user, a terminal can identify the operation intension of the user to execute a corresponding processing operation. Specifically, a manufacturer of the terminal can preset the processing operation corresponding to the first operation instruction (for example, deleting the information item between the two spaced information items is used as the preset processing operation corresponding to the first operation instruction), when in use, the user can modify the corresponding processing operation (for example, modify a deletion operation to an operation of storing the information item between the two spaced information items in the private space).

In the above technical solution, preferably, the processing unit 106 is further adapted to: when receiving the first operation instruction, selecting the processing operation on the information item between the two spaced information items according to the attribute of the information item between the two spaced information items, so as to process the information item between the two spaced information items.

In the technical solution, for example, an information item B is an information item between an information item A and an information item C, if it is determined that the information item B belongs to private information according to the preset of the user, when the first operation instruction is executed on the information item A and the information item C, the information item B can be directly put in the private space; if it is determined that the information item B belongs to junk information according to the preset of the user, when the first operation instruction is executed on the information item A and the information item C, the information item B can be directly deleted; and if it is determined that the information item B belongs to information needing to be hidden, when the first operation instruction is executed on the information item A and the information item C, the information item B can be directly hidden.

Of course, the terminal can also count the operation habits of the user, for example, when the times of the user for adding the information of a linkman E to the private space exceed preset times, the terminal determines the information of the linkman E as private information, when the information of the linkman E is located between spaced information D and information F, and when executing the first operation instruction on the information D and the information F, the terminal directly adds the information E to the private space.

In the above technical solution, preferably, the first operation instruction includes a kneading gesture or a separation gesture.

In the technical solution, the kneading gesture is executed on the two spaced information items to not display the information item between the two spaced information items, such that the operation process is vivid, and the pleasure of the user operation is improved. The separation gesture is executed on the two spaced information items to not display the information item between the two spaced information items, for example, when executing the deletion operation, when the separation gesture is executed on the two spaced information items, an animation of putting the information item between the two spaced information items in a dustbin can be played between the two spaced information items, such that the operation process is vivid similarly.

In the above technical solution, preferably, the judging unit 104 is further adapted to: when receiving a second operation instruction of two adjacent information items in the list, judging to display a non-displayed information item between the two adjacent information items.

In the technical solution, when the user needs to display the hidden information item in the list, for example, display the information item added to the private space, the operation mode in the related technology is to set in the private space in general, the operation process is tedious, and a lot of time of the user is wasted, but by means of the manner that when receiving the second operation instruction of two adjacent information items in the list, the non-displayed information item between the two adjacent information items is displayed, the user only needs to operate the two adjacent information items in the list, thereby greatly facilitating the operation process of the user and improving the user experience.

In the above technical solution, preferably, the non-displayed information item includes an information item stored in the specified storage space or a hidden information item.

In the technical solution, specifically, the information item stored in the specified storage space can be an information item added to the private space or an information item added to the blacklist.

In the above technical solution, preferably, the second operation instruction includes a separation gesture.

In the technical solution, the separation gesture is executed on the two adjacent information items to display the information item between the two connected information items, such that the operation process is vivid, and the pleasure of the user operation is improved.

Fig. 2 shows a schematic diagram of a flow of a terminal operation method according to an embodiment of the present invention.

As shown in Fig. 2, the terminal operation method according to the embodiment of the present invention includes: step 202, displaying a list with a plurality of information items; step 204, judging whether displaying an information item between two specified information items according to a received operation instruction of the two specified information items in the list, so as to obtain a judgment result; and step 206, processing the information item between the two specified information items according to the judgment result.

In the technical solution, when the operation instruction of the two specified information items in the list is received, whether displaying the information item between the two specified information items according to the received operation instruction is processed, such that the user can conveniently manage the list on the terminal display interface by simple operations, thereby improving the operation efficiency and being conducive to improving the operation experience of the user.

In the above technical solution, preferably, when receiving a first operation instruction of two spaced information items in the list, judging not to display the information item between the two spaced information items.

In the technical solution, for example, when the user needs to delete a specified information item in the list, in the operation mode in related technology the information item to be deleted needs to be long pressed to pop up a prompt message and delete the information item according to the prompt message, or when the user needs to add a specified information item in the list to a private list, the user needs to set in a private mode, the operation process is tedious, and a lot of time of the user is wasted, but by means of the manner that when receiving the first operation instruction of the two spaced information items in the list, the information item between the two spaced information items is not displayed, the user can operate two information items adjacent to the specified information item in the list when needing not to display the specified information item (for example, delete the specified information item or add the specified information item to the private list and the like), thereby greatly facilitating the user operation and improving the user experience.

In the above technical solution, preferably, the processing operation of not displaying the information item between the two spaced information items includes: deleting the information item between the two spaced information items, or storing the information item between the two spaced information items in a specified storage space or hiding the information item between the two spaced information items.

In the technical solution, specifically, the storing the information item between the two spaced information items in a specified storage space can be storing the information item between the two spaced information items in a private space or adding the information item between the two spaced information items to a backlist, and the like.

In the above technical solution, preferably, before receiving the first operation instruction of the two spaced information items in the list, the terminal operation method further includes: associating the first operation instruction with a specified processing operation according to a received association instruction, so as to process the information item between the two spaced information items according to the processing operation associated with the first operation instruction, when judging not to display the information item between the two spaced information items.

In the technical solution, since the first operation instruction is associated with the specified processing operation, when receiving the first operation instruction of the user, a terminal can identify the operation intension of the user to execute a corresponding processing operation. Specifically, a manufacturer of the terminal can preset the processing operation corresponding to the first operation instruction (for example, deleting the information item between the two spaced information items is used as the preset processing operation corresponding to the first operation instruction), when in use, the user can modify the corresponding processing operation (for example, modify a deletion operation to an operation of storing the information item between the two spaced information items in the private space).

In the above technical solution, preferably, the first operation instruction includes a kneading gesture or a separation gesture.

In the technical solution, the kneading gesture is executed on the two spaced information items to not display the information item between the two spaced information items, such that the operation process is vivid, and the pleasure of the user operation is improved. The separation gesture is executed on the two spaced information items to not display the information item between the two spaced information items, for example, when executing the deletion operation, when the separation gesture is executed on the two spaced information items, an animation of putting the information item between the two spaced information items in a dustbin can be played between the two spaced information items, such that the operation process is vivid similarly.

In the above technical solution, preferably, when receiving a second operation instruction of two adjacent information items in the list, judging to display a non-displayed information item between the two adjacent information items.

In the technical solution, when the user needs to display the hidden information item in the list, for example, display the information item added to the private space, the operation mode in the related technology is to set in the private space in general, the operation process is tedious, and a lot of time of the user is wasted, but by means of the manner that when receiving the second operation instruction of two adjacent information items in the list, the non-displayed information item between the two adjacent information items is displayed, the user only needs to operate the two adjacent information items in the list, thereby greatly facilitating the operation process of the user and improving the user experience.

In the above technical solution, preferably, the non-displayed information item includes an information item stored in the specified storage space or a hidden information item.

In the technical solution, specifically, the information item stored in the specified storage space can be an information item added to the private space or an information item added to the blacklist.

In the above technical solution, preferably, the second operation instruction includes a separation gesture.

In the technical solution, the separation gesture is executed on the two adjacent information items to display the information item between the two connected information items, such that the operation process is vivid, and the pleasure of the user operation is improved.

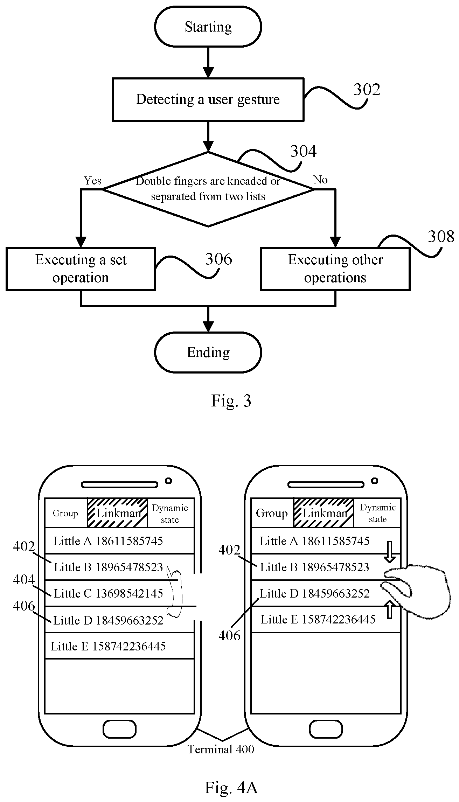

Fig. 3 shows a schematic diagram of a flow of a terminal operation method according to another embodiment of the present invention.

As shown in Fig. 3, the terminal operation method according to another embodiment of the present invention includes:
step 302, detecting a user gesture;
step 304, judging whether double fingers in the user gesture are kneaded or separated from two specified information items, if so, executing step 306, and if not, executing step 308;
step 306, when judging that the double fingers in the user gesture are kneaded or separated from the two specified information items, executing a set operation. For example, when judging that the double fingers in the user gesture are kneaded or separated from the two spaced information items, the information item between two spaced information items is not displayed; when judging that the double fingers in the user gesture are separated from the two adjacent information items, the non-displayed information item between the two adjacent information items is displayed, and when judging that the double fingers in the user gesture are kneaded from the two adjacent information items, the two adjacent information items can be merged; and
step 308, when judging that the double fingers in the user gesture are not kneaded or separated from two lists, executing other operations.

The terminal operation solution according to the embodiment of the present invention will be illustrated below in detail in combination with Fig. 4A to Fig. 4C.

Fig. 4A to Fig. 4C show a schematic diagram of a terminal operation interface according to an embodiment of the present invention.

As shown in Fig. 4A, a contact list is displayed on a display interface of a terminal 400, when a user needs to add an information item 404 in the contact list to a private space (or delete the information item and the like), the user can execute a kneading gesture on an information item 402 and an information item 406 adjacent to the information item 404, so as not to display the information item 402 in the contact list, and the operation process is vivid.

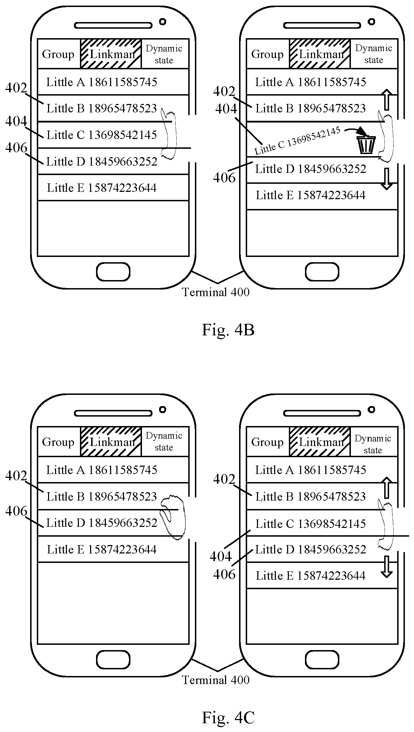

As shown in Fig. 4B, the contact list is displayed on the display interface of the terminal 400, when the user needs to delete the information item 404 in the contact list (or add the information item to the private space and the like), the user can execute a separation gesture on the information item 402 and the information item 406 adjacent to the information item 404 and display an animation of putting the information item 404 in a dustbin, so that the user operation is interesting, and the operation experience of the user is improved beneficially.

As shown in Fig. 4C, when the user needs to display the non-displayed information item 404 between the information item 402 and the information item 406 in the contact list on the display interface of the terminal 400, for example, the information item 404 is added to the private space, in related technology, the user needs to input a password in the private space and then set to display the information item 404, so that the operation process is tedious. By executing the separation gesture on the information item 402 and the information item 406, the information item 404 can be conveniently displayed, and the user does not need to set in the private space, thereby improving the operation efficiency of the user.

In addition, since the operation gesture can be set by the user, and meanwhile, when the user needs to display the linkman added to the private space, the user needs to confirms the position of the linkman in the contact list, so that the manner of not inputting the password and directly displaying the linkman in the private space in the contact list by the gesture is safe as well.

The technical solutions of the present invention have been illustrated above in detail in combination with the accompanying drawings, considering that in related technology, the user cannot conveniently operate the information items in the list, which is unbeneficial for the operation experience of the user. Therefore, the present invention proposes a new terminal operation solution, for enabling the user to conveniently manage the list on the terminal display interface by simple operations, thereby improving the operation efficiency and being conducive to improving the operation experience of the user.

A program product stored on a nonvolatile machine-readable medium is further provided, for operating a terminal, and the program product includes an executable instruction used for driving a computer system to execute the following steps: displaying a list with a plurality of information items; judging whether displaying an information item between two specified information items according to a received operation instruction of the two specified information items in the list, so as to obtain a judgment result; and processing the information item between the two specified information items according to the judgment result.

A nonvolatile machine-readable medium is further provided, a program product used for operating a terminal is stored in the nonvolatile machine-readable medium, the program product includes an executable instruction used for driving a computer system to execute the following steps: displaying a list with a plurality of information items; judging whether displaying an information item between two specified information items according to a received operation instruction of the two specified information items in the list, so as to obtain a judgment result; and processing the information item between the two specified information items according to the judgment result.

A machine readable program is further provided, and the program drives a machine to execute any terminal operation method in the above technical solutions.

A storage medium stored with a machine readable program is further provided, wherein the machine readable program drives a machine to execute any terminal operation method in the above technical solutions.

The foregoing descriptions are merely preferred embodiments of the present invention, rather than limiting the present invention. For those skilled in the art, the present invention can have a variety of modifications and variations.

## Claims

1. A terminal operation device (100), comprising:
a display unit (102) adapted to display a list with a plurality of information items(402, 404, 406);
a judging unit (104) adapted to judge whether to display an information item (404) between two specified information items (402, 406) according to a received operation instruction of the two specified information items in the list; and
a processing unit (106) adapted to process the information item (404) between the two specified information items (402, 406) according to a judgment result of the judging unit (104), wherein the judging unit (104) is specifically adapted to:
when receiving a first operation instruction of two spaced information items (402, 406) in the list, judge not to display the information item (404) between the two spaced information items (402, 406), and wherein when the judging unit (104) judges not to display the information item (404) between the two spaced information items (402, 406), a processing operation of the processing unit (106) on the information item (404) between the two spaced information items (402, 406) comprises:
deleting the information item (404) between the two spaced information items (402, 406), or storing the information item (404) between the two spaced information items (402, 406) in a specified storage space or hiding the information item (404) between the two spaced information items (402, 406),
**characterized in that**
the processing unit (106) is further adapted to:
when receiving the first operation instruction, select the processing operation on the information item (404) between the two spaced information items (402, 406) according to an attribute of the information item (404) between the two spaced information items (402, 406), so as to process the information item (404) between the two spaced information items (402, 406).

2. The terminal operation device (100) of claim 1, further comprising:
an association unit (108) adapted to associate the first operation instruction with a specified processing operation according to a received association instruction, for enabling the processing unit (106) to process the information item (404) between the two spaced information items (402, 406) according to the processing operation associated with the first operation instruction.

3. The terminal operation device (100) of any one of claims 1 to 2, wherein first operation instruction comprises a kneading gesture or a separation gesture.

4. The terminal operation device (100) of claim 1, wherein the judging unit (104) is further adapted to:
when receiving a second operation instruction of two adjacent information items (402, 406) in the list, judge to display a non-displayed information item (404) between the two adjacent information items (402, 406).

5. The terminal operation device (100) of claim 4, wherein the second operation instruction comprises a separation gesture.

6. A terminal operation method, comprising:
displaying a list with a plurality of information items (402, 404, 406);
judging whether to display an information item (404) between two specified information items (402, 406) according to a received operation instruction of the two specified information items (402, 406) in the list, so as to obtain a judgment result; and
processing the information item (404) between the two specified information items (402, 406) according to the judgment result, wherein when receiving a first operation instruction of two spaced information items (402, 406) in the list, judging not to display the information item (404) between the two spaced information items (402, 406), and wherein the processing operation of not displaying the information item between the two spaced information items comprises:
deleting the information item (404) between the two spaced information items (402, 406), or storing the information item (404) between the two spaced information items (402, 406) in a specified storage space or hiding the information item (404) between the two spaced information items (402, 406),
**characterized in that**
when receiving the first operation instruction the processing unit (106) selects the processing operation on the information item (404) between the two spaced information items (402, 406) according to an attribute of the information item (404) between the two spaced information items (402, 406), to process the information item (404) between the two spaced information items (402, 406).

7. The terminal operation method of claim 6, wherein before receiving the first operation instruction of the two spaced information items (402, 406) in the list, the terminal operation method further comprises:
associating the first operation instruction with a specified processing operation according to a received association instruction, so as to process the information item (404) between the two spaced information items (402, 406) according to the processing operation associated with the first operation instruction, when judging not to display the information item (404) between the two spaced information items (402, 406).

8. The terminal operation method of any one of claims 6 to 7, wherein the first operation instruction comprises a kneading gesture or a separation gesture.

9. The terminal operation method of claim 6, wherein when receiving a second operation instruction of two adjacent information items (402, 406) in the list, judging to display a non-displayed information item (404) between the two adjacent information items (402, 406).

10. The terminal operation method of claim 9, wherein the second operation instruction comprises a separation gesture.

## Patentansprüche

1. Endgerätbetriebsvorrichtung (100), umfassend:
eine Anzeigeeinheit (102), die dafür eingerichtet ist, eine Liste mit einer Vielzahl von Informationselementen (402, 404, 406) anzuzeigen;
eine Beurteilungseinheit (104), die dafür eingerichtet ist, gemäß einem empfangenen Betriebsbefehls der zwei spezifizierten Informationselemente in der Liste zu beurteilen, ob ein Informationselement (404) zwischen zwei spezifizierten Informationselementen (402, 406) anzuzeigen ist; und
eine Verarbeitungseinheit (106), die dafür eingerichtet ist, das Informationselement (404) zwischen den zwei spezifizierten Informationselementen (402, 406) gemäß einem Beurteilungsergebnis der Beurteilungseinheit (104) zu verarbeiten, wobei die Beurteilungseinheit (104) spezifisch dafür eingerichtet ist:
beim Empfang eines ersten Betriebsbefehls von zwei beabstandeten Informationselementen (402, 406) in der Liste zu urteilen, das Informationselement (404) zwischen den zwei beabstandeten Informationselementen (402, 406) nicht anzuzeigen, und wobei, wenn die Beurteilungseinheit (104) urteilt, das Informationselement (404) zwischen den zwei beabstandeten Informationselementen (402, 406) nicht anzuzeigen, ein Verarbeitungsvorgang der Verarbeitungseinheit (106) an dem Informationselement (404) zwischen den zwei beabstandeten Informationselementen (402, 406) Folgendes umfasst:
Löschen des Informationselements (404) zwischen den zwei beabstandeten Informationselementen (402, 406) oder Speichern des Informationselements (404) zwischen den zwei beabstandeten Informationselementen (402, 406) in einem spezifizierten Speicherplatz oder Verbergen des Informationselements (404) zwischen den zwei beabstandeten Informationselementen (402, 406), **dadurch gekennzeichnet, dass**
die Verarbeitungseinheit (106) ferner dafür eingerichtet ist:
beim Empfang des ersten Betriebsbefehls den Verarbeitungsvorgang an dem Informationselement (404) zwischen den zwei beabstandeten Informationselementen (402, 406) gemäß einem Attribut des Informationselements (404) zwischen den zwei beabstandeten Informationselementen (402, 406) auszuwählen, um das Informationselement (404) zwischen den zwei beabstandeten Informationselementen (402, 406) zu verarbeiten.

2. Endgerätbetriebsvorrichtung (100) nach Anspruch 1, ferner umfassend:
eine Verknüpfungseinheit (108), die dafür eingerichtet ist, den ersten Betriebsbefehl gemäß einem empfangenen Verknüpfungsbefehl mit einem spezifizierten Verarbeitungsvorgang zu verknüpfen, um es der Verarbeitungseinheit (106) zu ermöglichen, das Informationselement (404) zwischen den zwei beabstandeten Informationselementen (402, 406) gemäß dem mit dem ersten Betriebsbefehl verknüpften Verarbeitungsvorgang zu verarbeiten.

3. Endgerätbetriebsvorrichtung (100) nach einem der Ansprüche 1 bis 2, wobei der erste Betriebsbefehl eine Knetgeste oder eine Trenngeste umfasst.

4. Endgerätbetriebsvorrichtung (100) nach Anspruch 1, wobei die Beurteilungseinheit (104) ferner dafür eingerichtet ist:
beim Empfang eines zweiten Betriebsbefehls von zwei benachbarten Informationselementen (402, 406) in der Liste zu urteilen, ein nicht angezeigtes Informationselement (404) zwischen den zwei benachbarten Informationselementen (402, 406) anzuzeigen.

5. Endgerätbetriebsvorrichtung (100) nach Anspruch 4, wobei der zweite Betriebsbefehl eine Trenngeste umfasst.

6. Endgerätbetriebsverfahren, umfassend:
Anzeigen einer Liste mit einer Vielzahl von Informationselementen (402, 404, 406);
Beurteilen, ob ein Informationselement (404) zwischen zwei spezifizierten Informationselementen (402, 406) anzuzeigen ist, gemäß einem empfangenen Betriebsbefehl der zwei spezifizierten Informationselemente (402, 406) in der Liste, um ein Beurteilungsergebnis zu erhalten; und
Verarbeiten des Informationselements (404) zwischen den zwei spezifizierten Informationselementen (402, 406) gemäß dem Beurteilungsergebnis, wobei, wenn ein erster Betriebsbefehl von zwei beabstandeten Informationselementen (402, 406) in der Liste empfangen wird, beurteilt wird, das Informationselement (404) zwischen den zwei beabstandeten Informationselementen (402, 406) nicht anzuzeigen, und wobei der Verarbeitungsvorgang des Nichtanzeigens des Informationselements zwischen den zwei beabstandeten Informationselementen Folgendes umfasst:
Löschen des Informationselements (404) zwischen den zwei beabstandeten Informationselementen (402, 406) oder Speichern des Informationselements (404) zwischen den zwei beabstandeten Informationselementen (402, 406) in einem spezifizierten Speicherplatz oder Verbergen des Informationselements (404) zwischen den zwei beabstandeten Informationselementen (402, 406), **dadurch gekennzeichnet, dass**
beim Empfang des ersten Betriebsbefehls die Verarbeitungseinheit (106) den Verarbeitungsvorgang an dem Informationselement (404) zwischen den zwei beabstandeten Informationselementen (402, 406) gemäß einem Attribut des Informationselements (404) zwischen den zwei beabstandeten Informationselementen (402, 406) auswählt, um das Informationselement (404) zwischen den zwei beabstandeten Informationselementen (402, 406) zu verarbeiten.

7. Endgerätbetriebsverfahren nach Anspruch 6, wobei vor dem Empfang des ersten Betriebsbefehls der zwei beabstandeten Informationselemente (402, 406) in der Liste das Endgerätbetriebsverfahren ferner Folgendes umfasst:
Verknüpfen des ersten Betriebsbefehls mit einem spezifizierten Verarbeitungsvorgang gemäß einem empfangenen Verknüpfungsbefehl, um das Informationselement (404) zwischen den zwei beabstandeten Informationselementen (402, 406) gemäß dem mit dem ersten Betriebsbefehl verknüpften Verarbeitungsvorgang zu verarbeiten, wenn geurteilt wird, das Informationselement (404) zwischen den zwei beabstandeten Informationselementen (402, 406) nicht anzuzeigen.

8. Endgerätbetriebsverfahren nach einem der Ansprüche 6 bis 7, wobei der erste Betriebsbefehl eine Knetgeste oder eine Trenngeste umfasst.

9. Endgerätbetriebsverfahren nach Anspruch 6, wobei beim Empfang eines zweiten Betriebsbefehls von zwei benachbarten Informationselementen (402, 406) in der Liste geurteilt wird, ein nicht angezeigtes Informationselement (404) zwischen den zwei benachbarten Informationselementen (402, 406) anzuzeigen.

10. Endgerätbetriebsverfahren nach Anspruch 9, wobei der zweite Betriebsbefehl eine Trenngeste umfasst.

## Revendications

1. Dispositif d'opération sur terminal (100), comprenant :
une unité d'affichage (102) adaptée pour afficher une liste avec une pluralité d'éléments d'informations (402, 404, 406) ;
une unité d'estimation (104) adaptée pour estimer s'il faut afficher un élément d'informations (404) entre deux éléments d'informations (402, 406) spécifiés selon une instruction d'opération reçue des deux éléments d'informations spécifiés dans la liste ; et
une unité de traitement (106) adaptée pour traiter l'élément d'informations (404) entre les deux éléments d'informations (402, 406) spécifiés selon un résultat d'estimation de l'unité d'estimation (104), dans lequel l'unité d'estimation (104) est spécifiquement adaptée pour :
lors de la réception d'une première instruction d'opération de deux éléments d'informations espacés (402, 406) dans la liste, estimer qu'il ne faut pas afficher l'élément d'informations (404) entre les deux éléments d'informations espacés (402, 406), et dans lequel lorsque l'unité d'estimation (104) estime qu'il ne faut pas afficher l'élément d'informations (404) entre les deux éléments d'informations espacés (402, 406), une opération de traitement de l'unité de traitement (106) sur l'élément d'informations (404) entre les deux éléments d'informations espacés (402, 406) comprend :
la suppression de l'élément d'informations (404) entre les deux éléments d'informations espacés (402, 406), ou le stockage de l'élément d'informations (404) entre les deux éléments d'informations espacés (402, 406) dans un espace de stockage spécifié ou la dissimulation de l'élément d'informations (404) entre les deux éléments d'informations espacés (402, 406),
**caractérisé en ce que**
l'unité de traitement (106) est en outre adaptée pour :
lors de la réception de la première instruction d'opération, sélectionner l'opération de traitement sur l'élément d'informations (404) entre les deux éléments d'informations espacés (402, 406) selon un attribut de l'élément d'informations (404) entre les deux éléments d'informations espacés (402, 406), de façon à traiter l'élément d'informations (404) entre les deux éléments d'informations espacés (402, 406).

2. Dispositif d'opération sur terminal (100) selon la revendication 1, comprenant en outre :
une unité d'association (108) adaptée pour associer la première instruction d'opération à une opération de traitement spécifiée selon une instruction d'association reçue, pour permettre à l'unité de traitement (106) de traiter l'élément d'informations (404) entre les deux éléments d'informations espacés (402, 406) selon l'opération de traitement associée à la première instruction d'opération.

3. Dispositif d'opération sur terminal (100) selon l'une quelconque des revendications 1 et 2, dans lequel la première instruction d'opération comprend un geste de malaxage ou un geste de séparation.

4. Dispositif d'opération sur terminal (100) selon la revendication 1, dans lequel l'unité d'estimation (104) est en outre adaptée pour :
lors de la réception d'une seconde instruction d'opération de deux éléments d'informations adjacents (402, 406) dans la liste, estimer qu'il faut afficher un élément d'informations non affiché (404) entre les deux éléments d'informations adjacents (402, 406).

5. Dispositif d'opération sur terminal (100) selon la revendication 4, dans lequel la seconde instruction d'opération comprend un geste de séparation.

6. Procédé d'opération sur terminal, comprenant :
l'affichage d'une liste avec une pluralité d'éléments d'informations (402, 404, 406) ;
l'estimation qu'il faut afficher ou non un élément d'informations (404) entre deux éléments d'informations spécifiés (402, 406) selon une instruction d'opération reçue des deux éléments d'informations spécifiés (402, 406) dans la liste, de façon à obtenir un résultat d'estimation ; et
le traitement de l'élément d'informations (404) entre les deux éléments d'informations spécifiés (402, 406) selon le résultat d'estimation, dans lequel lors de la réception d'une première instruction d'opération de deux éléments d'informations espacés (402, 406) dans la liste, l'estimation du fait qu'il ne faut pas afficher l'élément d'informations (404) entre les deux éléments d'informations espacés (402, 406), et dans lequel l'opération de traitement consistant à ne pas afficher l'élément d'informations entre les deux éléments d'informations espacés comprend :
la suppression de l'élément d'informations (404) entre les deux éléments d'informations espacés (402, 406), ou le stockage de l'élément d'informations (404) entre les deux éléments d'informations espacés (402, 406) dans un espace de stockage spécifié ou la dissimulation de l'élément d'informations (404) entre les deux éléments d'informations espacés (402, 406), **caractérisé en ce que**
lors de la réception de la première instruction d'opération, l'unité de traitement (106) sélectionne l'opération de traitement sur l'élément d'informations (404) entre les deux éléments d'informations espacés (402, 406) selon un attribut de l'élément d'informations (404) entre les deux éléments d'informations espacés (402, 406), pour traiter l'élément d'informations (404) entre les deux éléments d'informations espacés (402, 406).

7. Procédé d'opération sur terminal selon la revendication 6, dans lequel avant la réception de la première instruction d'opération des deux éléments d'informations espacés (402, 406) dans la liste, le procédé d'opération sur terminal comprend en outre :
l'association de la première instruction d'opération à une opération de traitement spécifiée selon une instruction d'association reçue, de façon à traiter l'élément d'informations (404) entre les deux éléments d'informations espacés (402, 406) selon l'opération de traitement associée à la première instruction d'opération, lors de l'estimation du fait qu'il ne faut pas afficher l'élément d'informations (404) entre les deux éléments d'informations espacés (402, 406).

8. Procédé d'opération sur terminal selon l'une quelconque des revendications 6 et 7, dans lequel la première instruction d'opération comprend un geste de malaxage ou un geste de séparation.

9. Procédé d'opération sur terminal selon la revendication 6, dans lequel lors de la réception d'une seconde instruction d'opération de deux éléments d'informations adjacents (402, 406) dans la liste, l'estimation du fait qu'il faut afficher un élément d'informations non affiché (404) entre les deux éléments d'informations adjacents (402, 406).

10. Procédé d'opération sur terminal selon la revendication 9, dans lequel la seconde instruction d'opération comprend un geste de séparation.
